# EUROPÄISCHE PATENTANMELDUNG

(11) **EP 0 844 405 A2**
(43) Veröffentlichungstag der Anmeldung: **27.05.1998**
(21) Anmeldenummer: 97120782.4
(22) Anmeldetag: 26.11.1997
(51) Int. Cl.: F16B 37/04

(54) **Element zum Festlegen in einem Innenraum eines Werkstücks**

(30) Priorität: 26.11.1996 DE 29620578 U; 29.01.1997 DE 29701445 U; 20.02.1997 DE 29702958 U; 22.08.1997 DE 29715058 U; 24.09.1997 DE 29717089 U
(71) Anmelder: Holscher, Winfried K.W., 78224 Singen (DE)
(72) Erfinder: Holscher, Winfried K.W., 78224 Singen (DE)
(74) Vertreter: Behrmann, Niels, Dipl.-Ing.

(57) **Zusammenfassung**

Die Erfindung betrifft ein Element zum Festlegen in einem hinterschnittenen Innenraum (17) einer Längsnut (16) eines Werkstücks (10) mit wenigstens einer die Breite des engen Nutenquerschnitts (18) übersteigenden Erstreckung als Verbindungsmittel zum Anschluß eines die Längsnut/en aufweisenden ersten Werkstückes an ein anderes Werkstück, welches seinerseits mit Längsnut/en versehen ist, deren Querschnitt sich zur Profilstirn hin öffnet, wobei ein winkelförmiger Spannverbinder (40) zumindest einends einen von einer Basisplatte (41) etwa rechtwinkelig abragenden Bügelschenkel (42) aufweist und am Übergang der Basisplatte ein beidseitiger Seitenschlitz (46) einen mittigen Schenkelhals (47) begrenzt.

## Beschreibung

Die Erfindung betrifft ein Element zum Festlegen in einem hinterschnittenen Innenraum einer längsnut eines Werkstücks, insbesondere eines Hohlprofiles mit wenigstens einer die Breite des engen Nutenquerschnitts übersteigenden Erstreckung als Verbindungseinrichtung zum Anschluß eines die Längsnuten aufweisenden ersten Werkstückes an ein anderes Werkstück, welches seinerseits mit Längsnuten versehen ist, deren Querschnitt sich zur Profilstirn hin öffnet.

Die Schrift zum DE-GM 92 12 696 des Anmelders beschreibt als Verbindungsstück dieser Art ein mutterartiges Element, welches insbesondere bei metallischen Hohlprofilen zur Anwendung gelangt, deren Innenraum von außen her nicht zugänglich ist. Jenes vorbekannte Element ist etwa quaderförmig ausgebildet und weist wenigstens zwei einander gegenüberliegende, in einem Winkel geneigte Flankenwände auf sowie ein Federorgan, das einerseits an einer der geneigten Flankenwände festliegt und anderseits die engere Oberfläche des Elements mit seinem freien Ende übergreift; dieses ist in entspanntem Zustand der Feder in Abstand zum Element angeordnet. Wird das Federorgan an das Mutterelement angedrückt, kann dieses -- mit seiner Schmalseite zuerst --ohne weiteres in die hinterschnittene Nut eingeschoben werden.

In Kenntnis dieses Systems ist es Aufgabe der Erfindung eine Befestigungsmöglichkeit von insbesondere stranggepreßten Hohlprofilen mehreckigen -- insbesondere rechteckigen -- Querschnittes zu schaffen, die miteinander im rechten Winkel zu verbinden sind. Dabei soll die Profilstirn des einen Werkstückes auf einer Längsseite des anderen Werkstückes aufliegen und daran -- weitestgehend verdrehsicher -- gehalten werden.

Zur Lösung dieser Aufgabe führt die Lehre des unabhängigen Anspruches, die Unteransprüche geben günstige Weiterentwicklungen der Erfindung an.

Erfindungsgemäß weist ein winkel- bzw. bügelförmiger Spannverbinder zumindest einends und bevorzugt beidends einen von einer Basisplatte etwa rechtwinklig abragenden Bügelschenkel auf, und am Übergang der Basisplatte zum Bügelschenkel begrenzen in diesem beidseitig angebrachte Seitenschlitze einen mittigen Schenkelhals des Spannverbinders. Durch diese Maßgaben ist es möglich, den Bügelschenkel in eine Einschubbahn eines Hohlprofils von dessen Stirnfläche her so einzuschieben, daß seine Bügelschenkel von der entsprechenden Seitenwandung abragen.

Nach einem weiteren Merkmal der Erfindung ist in der Basisplatte wenigstens ein Spannelement angeordnet, insbesondere eine Stiftschraube, welche in Verbindungstellung den Spannverbinder in einer Spannlage fixiert.

Als günstig hat es sich erwiesen, daß die Dicke des Werkstoffstreifens, aus dem Basisplatte und Bügelschenkel gebogen sind, also auch deren Dicke, etwas geringer ist als die Höhe einer Einschubbahn im hinterschnittenen Nutenbereich der Längsnut des Hohlprofils. Die Höhe der Seitenschlitze ist etwas größer bemessen als die Dicke von -- den Nutenschlitz der Längsnut begrenzenden -- Formrippen, welche die Nutenränder darstellen.

Zur Befestigung zweier zueinander rechtwinklig verlaufender Strangpreßprofile mit Längsnuten der beispielsweise für Messebauten, Möbel od. dgl. im Verkehr befindlichen Art, werden die aus dem einen Hohlprofil ragenden Bügelschenkel stirnwärts in die Einschubbahn des anderen Hohlprofils eingeführt.

Die Bügelschenkel sind ihrerseits mit einer Gewindebohrung ausgestattet, so daß sie im anderen Hohlprofil mit Schrauben, bevorzugt mit einer Stiftschraube, klemmend verspannt werden können.

Weiter bevorzugt ist die Stiftschraube in dem Bügelschenkel zur Basisplatte hin einwärts geneigt und schließt mit dieser einen Winkel von etwa 20° bis 40° ein.

Will man die Verspannung der Basisplatte von außen her durchführen, hat es sich als vorteilhaft herausgestellt, an der Basisplatte einen Werkstoffstreifen festzulegen, dessen freie Enden die Basisplatte beidends überragen und jeweils zumindest eine Stiftschraube aufnehmen. Letztere können auf das Nutentiefste abgesenkt und so in eine Spannstellung überführt werden.

Besonders günstig erfolgt der Spannvorgang bei zueinander geneigten Stiftschrauben - um diese Lage zu erreichen, können entweder Bohrungen geneigt in den Spannverbinder eingeformt oder aber jene Streifenenden längsschnittlich verformt bzw. gekröpft und aus der Ebene ihres Werkstoffstreifens geneigt sein.

Es wird deutlich, daß zum Festlegen der Hohlprofile aneinander Bohrungen nicht erforderlich sind, d. h. ein Verletzen der Hohlprofilwandungen findet nicht statt. Ein zentral vorhandener Innenraum im Hohlprofil kann so für den Transport eines Mediums genutzt werden. Ein weiterer Vorzug ist darin zu finden, daß ein Verschieben des stirnwärts aufsitzenden Hohlprofils am anderen Hohlprofil ohne weiteres möglich ist.

Da diese Verbindungsform für leichte bis mittlere Beanspruchungen gedacht ist, kann bei außergewöhnlicher Belastung für eine kraftschlüssige Verbindung beim ersten Hohlprofil eine Durchgangsbohrung nötig werden und im zweiten Hohlprofil stirnseitig ein Gewinde. Dieser Sonderfall gilt aber -- wie gesagt -- nur für hohe Belastungen.

Im Rahmen der Erfindung liegt eine besondere Führung des Spannverbinders an dem angefügten Hohlprofil; aus der Außenseite des Bügelschenkels des Spannverbinders -- oder auch aus der Innenfläche von dessen Basisplatte -- wird jeweils zumindest eine Führungsrippe geringer Höhe herausgeformt, deren Breite etwa jener des erwähnten Nutenschlitzes entspricht. Sie wird in diesen beim Zusammenbau des Systems eingesetzt und gewährleistet eine Verdrehsicherung.

Mit der erfindungsgemäßen Vorrichtung wird die vom Erfinder gesehene Aufgabe in bestechender Weise gelöst; nach dem Anziehen der Schraube/n in der Basisplatte -- bzw. den Streifenenden des zusätzlichen Werkstoffstreifens -- und den weiteren Stiftschrauben in den Bügelschenkeln sind die beiden Hohlprofile verdreh- und verschiebesicher verbunden.

Zusätzlicher und unabhängiger Schutz wird für das alternative Lösungsprinzip gemäß Anspruch 1 beansprucht. Nach dieser Realisierung der Erfindung ragt von der Basisplatte lediglich auf einer Seite ein Bügelschenkel ab, so daß ein erfindungsgemäßer, winkelförmiger Spannverbinder entsteht. Ansonsten gelten sämtliche erfindungsgemäßen Ausbildungen analog auch für diese alternative Realisierung der Erfindung.

Erfindungsgemäß wird durch diese Ausbildung erreicht, daß Hohlprofile in der erfindungsgemäßen Weise miteinander verbunden werden können und ein Innenwinkel zwischen diesen Hohlprofilen verbleibt, ohne daß in diesem Innenwinkel ein Schenkel des Spannverbinders sitzt; dieser ist vielmehr auf einer dem Innenwinkel abgewandten Seite anzuordnen. Damit können etwa Platten oder Scheiben vollständig in die jeweiligen Längsnuten des Innenwinkels der miteinander verbundenen Hohlprofile eingesetzt werden, ohne daß diese etwa in ihrem Randbereich von dem Schenkel behindert werden. Auch würde etwa eine in die Längsnuten eingesetzte Platte die Stabilität der Anordnung weiter erhöhen.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1:: den Querschnitt durch ein stranggepreßtes Hohlprofil mit in diesem angeordneten Befestigungsmitteln;
- Fig. 2:: eine teilweise geschnittene Draufsicht auf Fig. 1;
- Fig. 3,12:: jeweils einen Teil des Hohlprofils der Fig. 1 mit in dieses eingeschobenem -- hier teilweise geschnittenen -- Spannverbinder;
- Fig. 4,13,14:: jeweils einen Teilschnitt durch drei rechtwinkelig zueinander stehende Hohlprofile;
- Fig. 5, 8:: Stirnansichten des Spannverbinders in zwei Ausgestaltungen;
- Fig. 6, 9, 11,15:: Seitenansichten des Spannverbinders in vier Ausgestaltungen;
- Fig. 7, 10:: Draufsichten auf den Spannverbinder in zwei Ausgestaltungen;
- Fig. 16:: eine Seitenansicht eines Rohlings zur Herstellung des Spannverbinders nach Fig. 15;
- Fig. 17,18:: Draufsicht und Stirnansicht zu Fig. 16;
- Fig. 19:: eine Schrägsicht auf den Spannverbinder der Fig. 15;
- Fig. 20:: eine Teilschrägsicht auf einen anderen Spannverbinder;
- Fig. 21 bis 23:: eine alternative Ausführungsform der Erfindung analog zu den Fig. 15,17 und 19 mit einem winkelförmigen Spannverbinder, der lediglich einen Bügelschenkel aufweist.

Ein stranggepreßtes Hohlprofil 10 mit durch dessen zentrischen Rohrabschnitt 12 runden Querschnitts gelegten Querschnittsachsen A,B als Symmetrieachsen weist jeweils in der Mitte seiner Profilseitenwände 14 eine Längsnut 16 auf mit einem querschnittlich hinterschnittenen Nutenbereich 17. Der in der Oberfläche jeder der Profilseitenwände 14 vorhandene Nutenschlitz 18 der Längsnut 16 besitzt eine Breite a von beispielsweise 8 mm und wird an der Oberfläche 15 der Profilseitenwand 14 von seitlichen, in dieser Profilseitenwand 14 als Teile von ihr verlaufenden Formrippen 20 einer Dicke b von 4 mm begrenzt.

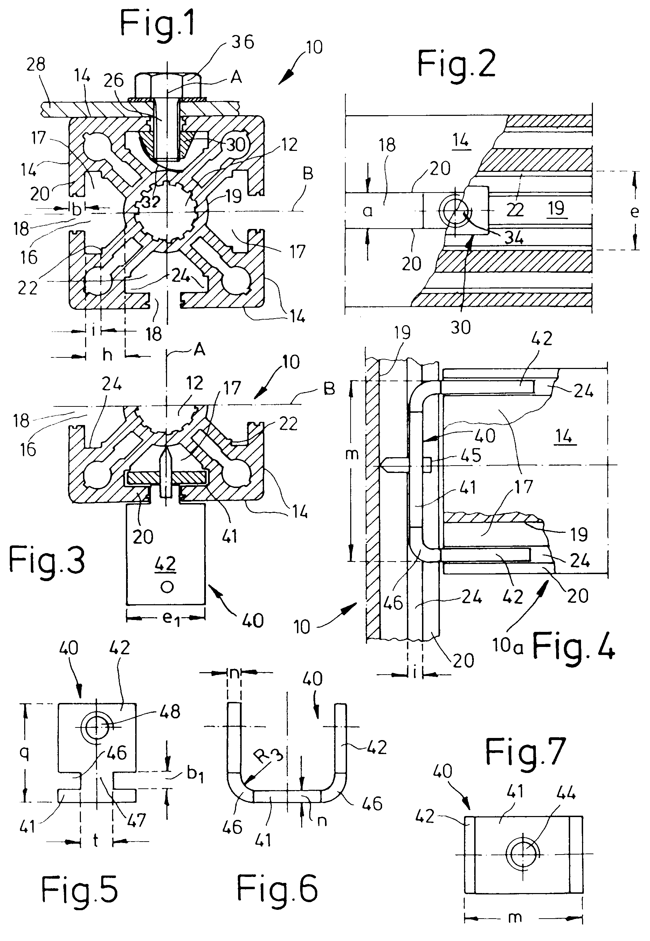

Der hinterschnittene Nutenbereich 17 ist eine von den Formrippen 20 übergriffene rinnenartige Ausnehmung etwa dreiecksförmigen Querschnittes einer Tiefe h von 10 mm sowie einer maximalen Breite e von 22 mm und bietet in Fig. 1 an der Innenseite der Formrippen 20 eine durch Wandstufen 22 zum Nutentiefsten 19 hin begrenzte Einschubbahn 24 der Höhe i an. Das Nutentiefste 19 wird von der Außenfläche des zentrischen Rohrabschnittes 12 des Hohlprofils 10 angeboten.

In den hinterschnittenen Nutenbereich 17 ist in Fig. 1 beispielhaft eine Befestigungseinheit 26 für eine Platte 28 aus einem aus einer Stahllegierung geformten Nutenstein 30 sowie einer Federzunge 32 eingesetzt. Die Federzunge 32 ist einends an einer Flankenfläche des Nutensteins 30 festgelegt, und ihre freie Kante liegt dem Nutentiefsten 19 auf. Der Nutenstein 30 wird von einer ein zentrisches Gewindeloch 34 durchgreifenden Schraube 36 gehalten.

Das Hohlprofil 10 kann zudem -- wie in Fig. 3,4 verdeutlicht -- einen Spannverbinder 40 aufnehmen, der aus einem U-förmig gebogenen Metallbügel der beispielsweisen Länge m von etwa 40 mm, der Dicke n von 2,5 mm und einer Breite e₁ besteht, die der Breite e der Einschubbahn 24 von hier 20 mm entspricht. Dessen beidends aus einer Basisplatte 41 herausgebogene Bügelschenkel 42 -- der Höhe q von hier 35 mm -- können in die Einschubbahnen 24 eines rechtwinkelig angesetzten Hohlprofils 10 eingefügt werden und halten gemäß Fig. 4 beide Hohlprofile 10 zusammen. In dem hier vertikalen linken Hohlprofil 10 ist die Basisplatte 41 durch eine -- eine zentrale Gewindebohrung 44 durchsetzende -- Stift- oder Madenschraube 45 gegen das Nutentiefste 19 verspannt.

Im Bereich der Formrippen 20 bzw. des Nutenschlitzes 18 sind in die Bügelschenkel 42 an der Basisplatte 41 Querschlitze 46 einer Breite b₁ eingefügt, die der Dicke b der Formrippe 20 mit Spiel etwa entspricht. Die Breite t des in diesem Bereich verbleibenden Schenkelhalses 47 mißt etwa die Breite a des Nutenschlitzes 18 sowie die Bügellänge m bei der Ausführung der Fig. 5 bis 7 etwa 30 mm bei einer Bügelhöhe q von 25 mm.

Der Spannverbinder 40 wird stirnseitig in das erste Hohlprofil 10 eingeführt und an der gewünschten Stelle durch die Stiftschraube 45 fixiert. Das zweite Hohlprofil 10 wird nun stirnseitig auf die beiden Bügelschenkel 42 des Spannverbinders 40 gesteckt. Dann werden in Gewindebohrungen 48 der Bügelschenkel 42 sitzende Stiftschrauben 45 angezogen. Nunmehr sind die beiden Hohlprofile 10,10ₐ miteinander rechtwinkelig verdrehsicher verbunden.

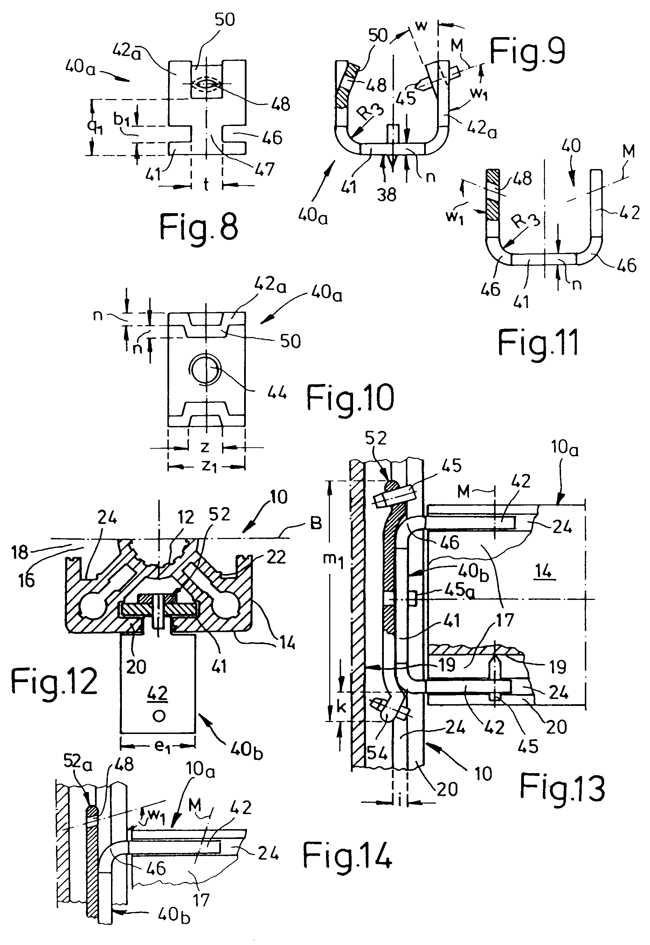

Die Fig. 8 bis 10 zeigen einen Spannverbinder 40ₐ, aus dessen Bügelschenkel 42ₐ eine pultartig geneigte Streifenausformung 50 der Breite z eingeformt ist; letztere entspricht etwa einem Drittel der Bügelbreite z₁ von 20 mm. Der Neigungswinkel w der Streifenausformung 50 zum Bügelschenkel 42ₐ mißt etwa 30°, ihr Abstand q₁ von der Unterfläche 38 der Basisplatte 41 hier etwa 15 mm.

Dank der -- von einem Winkel w₁ von etwa 120° bestimmten -- Schrägstellung der Achse M der Gewindebohrung 48 der Streifenausformung 50 -- siehe Fig. 9 --, und damit der Madenschraube 45, wird eine bessere Festlegung des Spannverbinders 40ₐ im Hohlprofil 10 erreicht. Dies ist auch bei Spannverbindern 40 ohne Streifenausformung 50 -- gemäß Fig. 11 -- durch einfache Schrägstellung jener Achse M möglich.

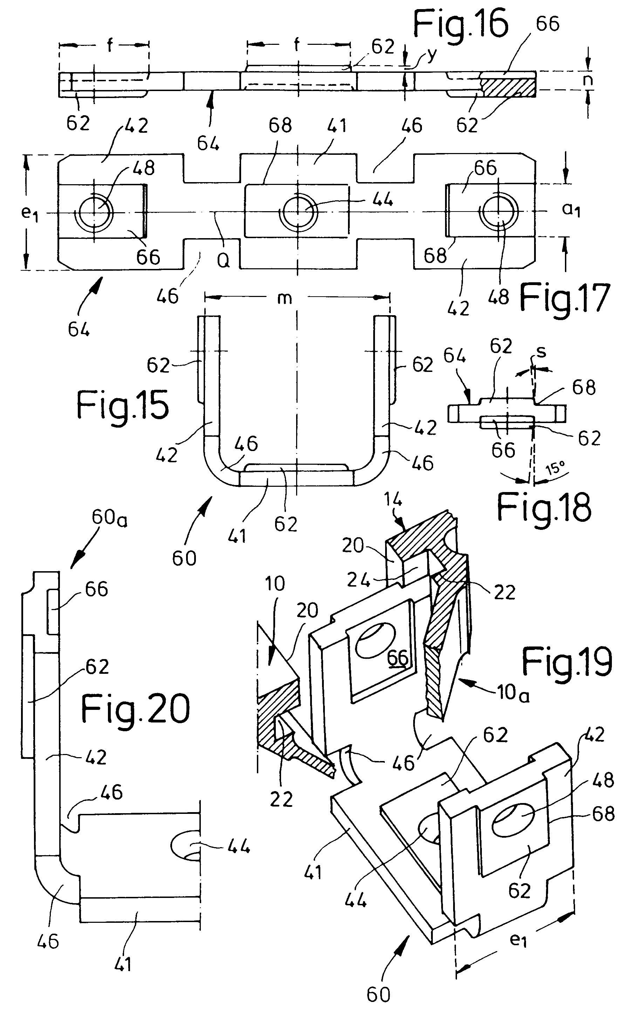

Beim Ausführungsbeispiel des Spannverbinders 40_{b} der Fig. 12,13 ist an dessen Basisplatte 41 ein Material- oder Werkstoffstreifen 52 festgelegt, beispielsweise durch eine mittige Stiftschraube 45ₐ mit der Basisplatte 41 verbunden. Dieser Werkstoffstreifen 52 der Länge m₁ überragt die Basisplatte 41 beidends um ein Kragmaß k und ist dort etwas gekröpft. Die Streifen- oder Kröpfenden 54 des Werkstoffstreifens 52 nehmen jeweils eine Stiftschraube 45 auf, die außerhalb des angeschlagenen Hohlprofils 10ₐ zu betätigen und aus der dargestellten Einschubstellung in eine Fixierstellung auf das Nutentiefste 19 des anderen Hohlprofils 10 absenkbar sind. Statt jenes Kröpfendes 54 mit zu ihm lotrechter Gewindebohrung 48 ist im Werkstoffstreifen 52ₐ der Fig. 14 die Achse M der Gewindebohrung 48 in jenem Winkel w₁ schräggestellt.

Die Basisplatte 41 sowie die Bügelschenkel 42 des Spannverbinders 60 nach Fig. 15,19 sind mit Führungsrippen 62 der Breite a₁, der Länge f sowie der Höhe y ausgestattet, welche jeweils mit dem -- in Einbaustellung benachbarten -- Nutenschlitz 18 haltend zusammenwirken; sie greifen in letzteren ein und fixieren so den Spannverbinder 60. Dieser wird aus einem streifenförmigen Rohling 64 der Dicke n und der Breite e₁ gebogen, aus dem jene Führungsrippen 62 so herausgeformt sind, daß anderseits deren Rückenflächen Einformungen 66 bestimmen. Die Längskanten 68 der Führungsrippen 62 sind gemäß Fig. 18 vom Rohlingskörper weg in einem Winkel s von etwa 15° zur Rohlingsachse Q einwärts geneigt.

Beim Ausführungsbeispiel der Fig. 20 sind lediglich die Bügelschenkel 42 des Spannverbinders 60ₐ mit jenen Führungsstreifen 62 und den Einformungen 66 versehen.

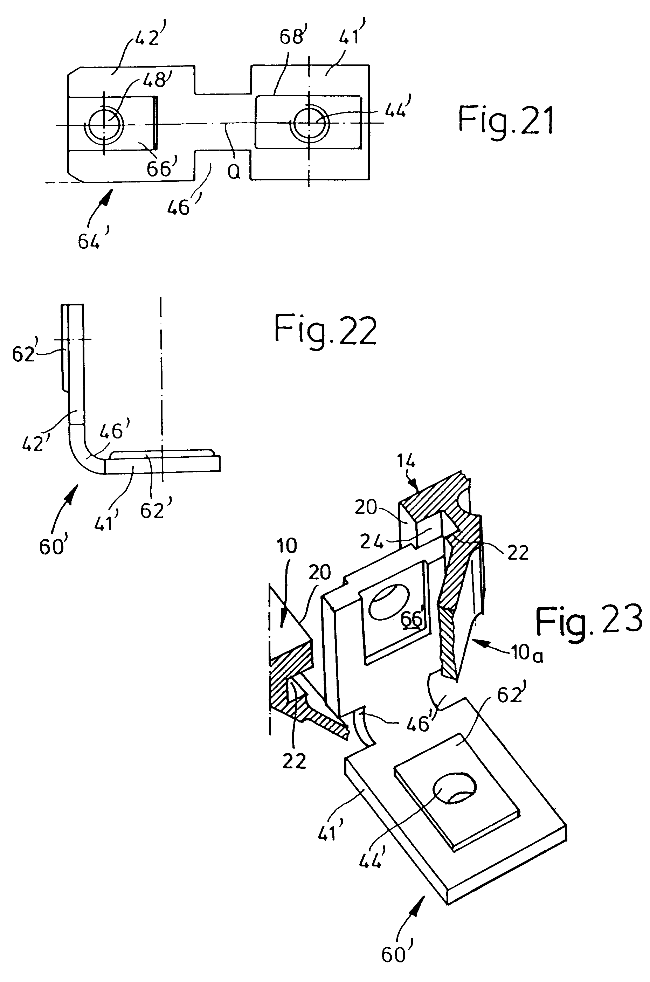

Die Fig. 21 bis 23 zeigen eine alternative Ausführungsform der Erfindung, für die unabhängig Schutz beansprucht wird. Die in den Fig. 21 bis 23 gezeigte, winkelförmige Ausbildung des erfindungsgemäßen Spannverbinders orientiert sich im Ausführungsbeispiel an der Ausführungsform der Fig. 15 bis 19; gleichwohl ist jedoch diese alternative, weitere Ausführungsform der Erfindung mit allen vorgenannten Realisierungsformen und Merkmalen analog ausführbar.

Die in den Fig. 21 bis 23 gezeigten Merkmale entsprechen analog denen der Fig. 15,17 bzw. 19 und sind mit einem Apostroph (') gekennzeichnet.

Diese Ausführungsform der Erfindung zeichnet aus, daß lediglich einseitig ein Bügelschenkel 42' von einer Basisplatte 41' abragt, so daß bei einer Verbindung zweier Hohlprofile im Sinne der Erfindung ein Verbindungspartner 10 (Fig. 23) lediglich in einer seiner Längsnuten mit dem (einen) Bügelschenkel 42' verbunden ist, während eine gegenüberliegende Längsnut des Hohlprofils 10 keinen eingesetzten Bügelschenkel aufweist. Dies ermöglicht dann, daß im Bereich dieser selbst im Verbindungszustand freien Längsnut etwa Scheiben, Platten oder ähnliche Elemente eingesetzt werden können, ohne daß diese durch einen in der Nut sitzenden Schenkelabschnitt des (nunmehr winkelförmigen) Spannverbinders behindert werden. Die mechanische Stabilität einer solchen Verbindung wird durch die einseitige Bügelausbildung als Winkel lediglich unwesentlich beeinträchtigt; darüber hinaus käme eine durch eine derartige Scheibe o.ä. erreichte, stabilisierende Wirkung.

## Patentansprüche

1. Element zum Festlegen in einem hinterschnittenen Innenraum einer Längsnut eines Werkstücks mit wenigstens einer die Breite des engen Nutenquerschnitts übersteigenden Erstreckung als Verbindungsmittel zum Anschluß eines die Längsnut/en aufweisenden ersten Werkstückes an ein anderes Werkstück, welches seinerseits mit Längsnut/en versehen ist, deren Querschnitt sich zur Profilstirn hin öffnet,
dadurch gekennzeichnet,
daß ein winkelförmiger Spannverbinder (40,40ₐ,40_{b};60,60ₐ) zumindest einends einen von einer Basisplatte (41) etwa rechtwinkelig abragenden Bügelschenkel (42, 42ₐ) aufweist und am Übergang der Basisplatte ein beidseitiger Seitenschlitz (46) einen mittigen Schenkelhals (47) begrenzt.

2. Element nach Anspruch 1, dadurch gekennzeichnet, daß an der Basisplatte (41) ein mit ihr verbundener Werkstoffstreifen (52) angeordnet ist, der die Basisplatte des Spannverbinders (40_{b}) beidends überragt und jeweils an seinen überstehenden Streifenenden (54) mit zumindest einem diese durchsetzenden Spannelement, insbesondere einer Stiftschraube (45), versehen ist.

3. Element nach Anspruch 1 oder 2, dadurch gekennzeichnet, daß ein Abschnitt (50) des Bügelschenkels (42ₐ) zu diesem in einem Winkel (w) geneigt ausgeformt ist und die Achse der Gewindebohrung (48) mit der Basisplatte (41) einen Neigungswinkel von etwa 20° bis 40° einschließt.

4. Element nach einem der Ansprüche 1 bis 3, dadurch gekennzeichnet, daß die Dicke (n) von Basisplatte (41) und Bügelschenkel (42, 42ₐ) etwas geringer ist als die Höhe (i) einer Einschubbahn (24) im hinterschnittenen Nutenbereich (17) der Längsnut (16) des Hohlprofils (10,10ₐ).

5. Element nach einem der Ansprüche 1 bis 4, dadurch gekennzeichnet, daß die Höhe (b₁) der Seitenschlitze (46) etwas größer ist als die Dicke (b) von den Nutenschlitz (18) der Längsnut (16) begrenzenden Formrippen (20).

6. Element nach einem der Ansprüche 1 bis 5, dadurch gekennzeichnet, daß in einer Verbindungsstellung mindestens ein Bügelschenkel (42, 42ₐ) des Spannverbinders (40, 40ₐ) in eine parallele Einschubbahn (24) des benachbarten Hohlprofils (10) eingesetzt ist.

7. Element nach einem der Ansprüche 2 bis 6, dadurch gekennzeichnet, daß sich in einer Verbindungsstellung die endwärtige Stiftschraube (45) des Werkstoffstreifens (52) des Spannverbinders (40_{b}) sowie die Stiftschraube von dessen Bügelschenkel (42,42ₐ) auf dem jeweiligen Nutentiefsten (19) der entsprechenden Längsnut (18) abstützt.

8. Element nach einem der Ansprüche 2 bis 7, dadurch gekennzeichnet, daß sich in einer Verbindungsstellung die Stiftschraube (45) der Basisplatte (41) des Spannverbinders (40, 40ₐ) sowie die Stiftschraube von dessen Bügelschenkel (42, 42ₐ) auf dem jeweiligen Nutentiefsten (19) der entsprechenden Längsnut (18) abstützt.

9. Element nach einem der Ansprüche 1 bis 8, dadurch gekennzeichnet, daß von mindestens einem Bügelschenkel (42) des Spannverbinders (60,60ₐ) außenseitig mittig eine Führungsrippe (62) abragt, deren Breite (a₁) etwa der Breite (a) des Nutenschlitzes (18) entspricht, in den die Führungsrippe einsetzbar ausgebildet ist.

10. Element nach Anspruch 9, dadurch gekennzeichnet, daß an der jeweils anderen Oberfläche des Bügelschenkels (42) und/oder der Basispaltte (41) der ausgeformten Führungsrippe (62) einer Einformung (66) gegenüberliegt.

11. Element nach Anspruch 9 oder 10, dadurch gekennzeichnet, daß die Längskanten (68) von der Oberfläche des Bügelschenkels (42) bzw. der Basisplatte (41) weg zueinander geneigt sind.

12. Element nach einem der Ansprüche 9 bis 11, dadurch gekennzeichnet, daß in der Führungsrippe (62) eine Gewindebohrung (44,48) für eine Stiftschraube (45) od. dgl. Klemmorgan vorgesehen ist.
